# EUROPÄISCHE PATENTSCHRIFT

(11) **EP 2 499 424 B1**
(45) Veröffentlichungstag und Bekanntmachung des Hinweises auf die Patenterteilung: **12.03.2014**
(21) Anmeldenummer: 10771624.3
(22) Anmeldetag: 27.09.2010
(51) Int. Cl.: F21S 8/00, F21V 23/02

(54) **RANDLICHT FÜR VERKEHRSWEGE, RANDLICHTKETTE MIT DERARTIGEN RANDLICHTERN SOWIE STRASSENABSCHNITT MIT EINER ODER MEHREREN DERARTIGEN RANDLICHTKETTEN**
EDGE LIGHT FOR TRAFFIC ROUTES, EDGE LIGHT STRING HAVING SUCH EDGE LIGHTS, AND ROAD SECTION HAVING ONE OR MORE SUCH EDGE LIGHT STRINGS
ÉCLAIRAGE DE BORDURE POUR VOIES DE CIRCULATION, CHAÎNE D'ÉCLAIRAGE ÉQUIPÉE D'ÉCLAIRAGES DE CE TYPE ET TRONÇON ROUTIER ÉQUIPÉ D'UNE OU DE PLUSIEURS CHAÎNES D'ÉCLAIRAGE DE CE TYPE

(30) Priorität: 02.10.2009 CH 15302009
(43) Veröffentlichungstag der Anmeldung: 19.09.2012
(73) Patentinhaber: Bieri, Hans, 8330 Pfäffikon (CH)
(72) Erfinder: Bieri, Hans, 8330 Pfäffikon (CH)
(74) Vertreter: Lusuardi, Werther
(86) Internationale Anmeldenummer: PCT/CH2010/000231
(87) Internationale Veröffentlichungsnummer: WO 2011/038519

(56) Entgegenhaltungen:
- EP-A1- 0 134 266
- DE-A1- 10 239 360
- US-A- 3 146 954

## Beschreibung

Die Erfindung bezieht sich auf ein Randlicht nach dem Oberbegriff des unabhängigen Anspruchs 1, auf eine Randlichtkette nach Anspruch 5 sowie auf Strassen und Schienenwege insbesondere solche in Tunneln mit derartigen Randlichtketten nach dem Anspruch 6.

Randlichter für Verkehrswege wie Strassen und Schienenwege sind beispielsweise in Ketten in Strassentunnels am Strassenrand und vor allem im Bankett der Strassentunnels angeordnet. Die Randlichter tragen zur Verkehrssicherheit in Tunneln bei, indem die Gefahr von Fahrzeugkollisionen mit der Tunnelwand und/oder den Banketts wesentlich vermindert wird. In Eisenbahntunneln dienen die Randlichter beispielsweise als Wegweiser zu Rettungsnischen und Rettungsstollen. Die Randlichter einer Lichterkette werden auch Lichtpunkte genannt. Die Kette wird auch als optisches Leitsystem bezeichnet.

Bisherige sind nicht sehr montagefreundlich, feuchteempfindlich.Es ist ein Randlicht bekannt, das eine ferromagnetische Grundplatte aufweist, auf welcher das Gehäuse des Lampenmoduls befestigt ist. Das Versorgungskabel, das Wechselstrom führt, wird eng um die ferromagnetische Grundplatte geführt welche den Wechselstrom induktiv auf eine Induktionsspule und über einen Gleichrichter zu den Lämpchen des Lampenmoduls führt. Die Lämpchen des Lampenmoduls sind meist in Reihen angeordnete LED (Light Emitting Diode; Leuchtdiode). Bei Lampenmodulen für Strassen sind Lämpchen gegen die Fahrrichtung und eventuell auch in Fahrrichtung gerichtet.

Es kommt häufig vor, dass Lampenmodule beschädigt werden, wenn Automobile in Tunnels gegen das Bankett oder die Tunnelwand fahren. Das Bankett ist die schmale, trottoirähnliche Band, auf dem sich im Notfall auch Personen gehen können. Das Bankett soll aber auch eine Kollision von Fahrzeugen direkt mit der Tunnelwand verhindern oder wenigstens erschweren.

Die US 3 146 954 offenbart die Merkmale des Oberbegriffs des Anspruchs 1.

Aufgabe der Erfindung ist es einen verbesserten Lampenmodul zu schaffen. Das Randlicht nach der Erfindung ist in Modulen aufgebaut. Die Module bilden das Randlicht. Ein erster Modul umfasst das Verbindungskabel das mit dem Wechselrichter verbunden ist sowie eine Induktionsspule. Ein zweiter Modul besteht aus einer Induktionsspule und nachgeschaltetem Gleichrichter, sowie den LED-Lämpchen oder Lampen.

Der Lampenmodul ist einfach zu montieren, zu ersetzen und auszutauschen. Er gewährleistet eine sichere Übertragung des Stroms zu den Lampen, bzw. Lämpchen. Zudem können die Lämpchen gedimmt werden, indem die Spannung des Stroms im Versorgungskabel verändert wird. So ist es beispielsweise möglich, die Helligkeit der Lampen verschiedener Randlichterketten verschieden hell leuchten zu lassen. Die Lampen von Gliederketten könnten auch blinkend betrieben werde, um z.B. zu warnen, dass es voraus ein Hindernis oder einen Stau auf der Strasse gibt.

Die Erfindung wird nachstehend anhand der schematischen Zeichnungen, welche ein Ausführungsbeispiel sowie Einzelheiten der Erfindung zeigen, näher erläutert.

Es zeigen:
- Fig. 1: in einem Schnitt ein Randlicht, dessen Modul mit Wechselrichter und erster Induktionsspule in die Bohrung, durch welches der Kanal für das Versorgungskabel verläuft eingesetzt ist. Der Modul ist je hälftig in zwei verschiedenen Positionen dargestellt.
- Fig. 2: in einer Seitenansicht einen lösbare Klemme mit dem Anschlussteil des Versorgungskabels das und den beiden Stiften, welche je einen Leiter des Versorgungskabels kontaktieren.

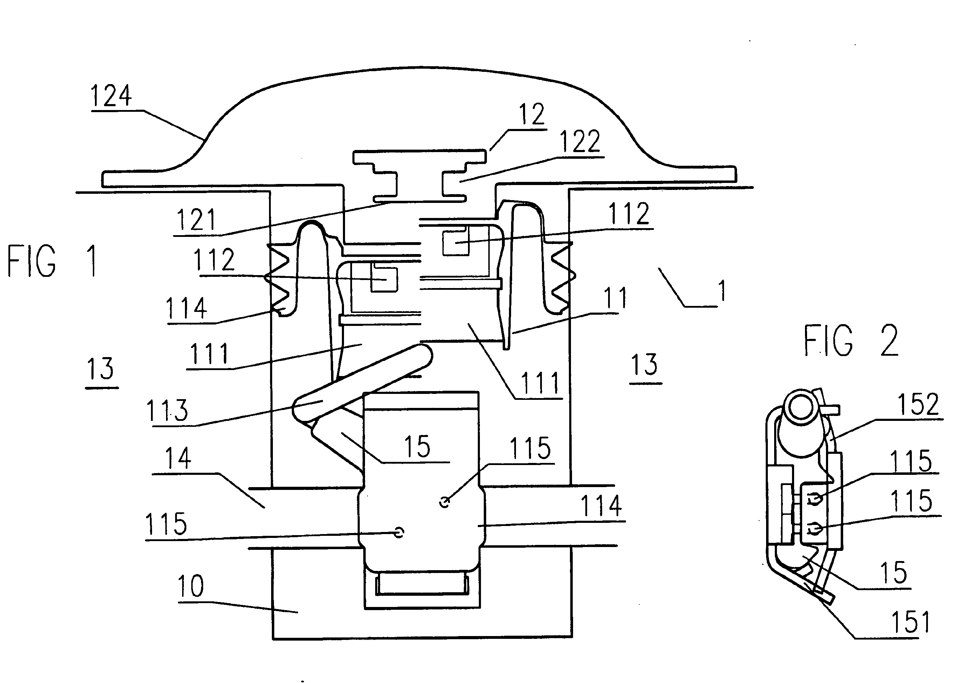

Der Schnitt von Fig. 1 zeigt das Randlicht 1 mit den ersten Modul 11 mit dem Wechselrichter 111 und der Induktionsspule 112 und dem zweiten Modul 12 mit der Induktionsspule 121 und dem Gleichrichter 122. Die Lämpchen (nicht gezeichnet) können eine separate Lampeneinheit bilden oder im zweiten Modul 12 integriert sein. Der zweite Modul ist im durchsichtigen Gehäuse 1124 angeordnet.

Bei der Montage der Randlichter 1 wird zuerst in der Strasse oder im Bankett eine Nute 13 gefräst. In der Nute 13 wird das Versorgungskabel 14 eingelegt. An jeder Stellen, wo ein Randlicht 1 angebracht wird, befindet sich ein Bohrloch 10, in welchem das Verbindungskabel 113 das zum ersten Modul führt am Versorgungskabel angeschlossen wird. Der erste Modul mit Wechselrichter 111 und Induktionsspule 112 wird mit einem Gummiring 114 in der Bohrung 10 federnd montiert. Der Gummiring 114 ist so konstruiert, dass der erste Modul 11 vom zweiten Modul 112 federnd in das Bohrloch 10 gedrückt werden kann. In Fig. 1 ist der Modul 11 in der linken Hälfte eingedrückt gezeichnet. Die rechte Hälfte von Modul 11 ist nicht eingedrückt dargestellt. Der Federweg liegt im Bereich von 4 mm bis 9 mm. vorzugsweise im Bereich von 7 mm. Es sind aber auch andere Grössen für den Federweg möglich. Der Abstand von Randlicht 1 zu Randlicht 1 liegt in der Regel im Bereich von 5 m bis 30 m. Übliche Abstände der Randlichter in Strassentunnels sind 10 m, 15 m, 20 m oder 25 m.

Die Verbindung zwischen dem Ende 116 des Verbindungskabels 113 mit in dauerelastisches Material eingebetteten Kontaktstiften 115 und dem Versorgungskabel 114 wird mit einem Klemmteil 15 erreicht, welcher die Kontaktstifte 115 im Ende 116 durch die Isolation des Versorgungskabels 14 und in die Leiter des Versorgungskabels 14 drückt. Das Klemmteil 15 muss lösbar sein um den einfachen Austausch oder Ersatz des Randlichts 1 zu ermöglichen.

Das Randlicht 1 für Verkehrswege, insbesondere für Strassen, ist mit einem Verbindungskabel 113 an ein Versorgungskabel 14, das Gleichstrom führt, mit einer Anschlusseinrichtung 15, 116 angeschlossen. Mit dem Verbindungskabel 113 wird der Lampenmodul des Randlichts 1 mit Strom aus dem Versorgungskabel 14 versorgt. Die mechanische Verbindung des Versorgungskabels 14 mit dem Verbindungskabel 113 erfolgt mit der Anschlusseinrichtung 15, 116, einer lösbaren Klemme aus Metall, welche Kontaktstifte 115, in das Versorgungskabel 14 presst, derart, dass die Kontaktstifte 115 mit den Leitern des Versorgungskabels galvanische verbunden sind. Die elektrische Verbindung vom Versorgungskabel 14 zu den Lampen des Randlichts 1 nach der Erfindung, erfolgt über das Verbindungskabel 113, einen Wechselrichter 111 und eine nachfolgende erste Induktionsspule 112, eine zweite Induktionsspule 121 und einen nachfolgenden Gleichrichter 122 und vom Gleichrichter zu der, oder zu den Lampen. Die erste Induktionsspule 12 ist in Richtung zur zweiten Induktionsspule 121 federnd gelagert.

Fig. 2 zeigt in einem Seitenschnitt ein zweiteiliges Klemmteil 15. Dieses besteht aus einem fast U-förmigen Basisteil 151 und dem Deckteil 152. In das Basisteil 151 wird das Versorgungskabel 14 und das Ende 116 des Verbindungskabels 113 eingelegt. Diese werden mit dem Deckteil 152 aufeinander gepresst und stellen mit den Drähten des Versorgungskabels 14 eine galvanische Verbindung her. Die beiden Drähte des Versorgungskabels haben einen Querschnitt von z.B. 2.5 mm² und die beiden Drähte haben z.B. einen Querschnitt von 0.35 mm². Es können natürlich auch Drähte mit anderen Querschnitten verwendet werden.

## Patentansprüche

1. Randlicht (1) für Verkehrswege, insbesondere für Strassen, mit einem Versorgungskabel (14) zum Führen von Gleichstrom, mit einer Anschlusseinrichtung (15, 116) zum Anschliessen des Verbindungskabels (14) für die Lampen des Lampenmoduls des Randlichts (1) am Versorgungskabel (14),
wobei die Verbindung des Verbindungskabels (113) vom Versorgungskabel (114) mit den Lampen über eine erste Induktionsspule (112), eine zweite Induktionsspule (121) und einen nachfolgenden Gleichrichter (122) erfolgt, **dadurch gekennzeichnet, dass** die Verbindung des Versorgungskabels mit den Lampen auch über einen Wechselrichter erfolgt und die erste Induktionsspule (112) in Richtung zur zweiten Induktionsspule (121) federnd gelagert ist.

2. Randlicht (1) für Verkehrswege nach Anspruch 1, bei welchem der Wechselrichter (111)mit der ersten Induktionsspule (112) und die zweite Induktionsspule (121) mit dem Gleichrichter (122) je einen Modul bilden und die beiden Module im montierten Zustand mit sich gegenüberliegenden Induktionsspulen (112, 121) angeordnet sind, wobei der Modul mit dem Wechselrichter (111) in Richtung zum Modul mit dem Gleichrichter (122) federnd befestigt ist.

3. Randlicht (1) für Verkehrswege nach einem der Ansprüche 1 oder 2, bei welchem das Verbindungskabel (113) am Ende (116), das mit dem Versorgungskabel (14) verbunden wird, einen Anschlussteil (114) mit Kontaktstiften (115) aufweist, der mit einem elektrisch isolierenden, druckelastischen Material umhüllt ist, und der isolierte Anschlussteil (114) mit einem Klemmteil (15), der lösbar ist, an das Versorgungskabel (14) gepresst wir, derart, dass die Kontaktstifte (115) mit den Leitern des Versorgungskabels (14) galvanisch verbunden sind.

4. Randlicht (1) für Verkehrswege nach einem der Ansprüche 1 bis 3, bei welchem die zweite Induktionsspule (121), der Gleichrichter (122) sowie die Lampe, bzw. die Lampen im zweiten Modul angeordnet sind.

5. Randlichterkette mit einem Versorgungskabel (14), an welchem in Abständen mehrere Randlichter (1) nach einem der Ansprüche 1 bis 4 angeschlossen sind.

6. Strasse oder Schienenwege, insbesondere Strasse in Strassentunnels oder Schienenwege in Eisenbahntunneln mit einer oder mehreren Randlichterketten nach Anspruch 5 im Randbereich der Strasse und/oder im Bankett der Tunnelstrasse oder im Randbereich und oder im Bankett eines Schienenwegs.

7. Strasse oder Schienenweg nach Anspruch 6, bei welcher das Versorgungskabel (14) in einer Nute (13) in der Strasse oder im Bankett der Strasse oder des Schienenwegs verläuft und die Randlichter (1) teilweise in Bohrungen (10) die zur Nute (13) geöffnet sind, angeordnet sind und in der Bohrung (10) das Anschlusskabel (113), der Wechselrichter (111) und die erste Induktionsspule (112) federnd angeordnet sind, und der zweite Modul, der in die Bohrung (10) ragt, als Deckel auf die Bohrung (10) aufgesetzt ist, wobei das Gehäuse (13) des zweiten Moduls auf seiner Unterseite mit der Strasse, dem Schienenweg oder dem Bankett wasserdicht verklebt ist.

## Claims

1. Edge light (1) for traffic routes, in particular for roadways, having a supply cable (14) for conducting direct current, and having a connecting device (15, 116) for connecting the connecting cable (14) for the lamps of the lamp module of the edge light (1) to the supply cable (14), the connection of the connecting cable (113) from the supply cable (114) to the lamps taking place via a first induction coil (112), a second induction coil (121), and a subsequent rectifier (122), **characterized in that** the connection of the supply cable to the lamps also takes place via an inverter, and the first induction coil (112) is elastically mounted in the direction of the second induction coil (121).

2. Edge light (1) for traffic routes according to Claim 1, in which the inverter (111) together with the first induction coil (112) and the second induction coil (121) together with the rectifier (122) each form a module, and in the installed state the two modules are situated with oppositely located induction coils (112, 121), the module which has the inverter (111) being elastically secured to the rectifier (122) in the direction of the module.

3. Edge light (1) for traffic routes according to one of Claims 1 or 2, in which the connecting cable (113) at its end (116) which is connected to the supply cable (14) has a connecting part (114) which has contact pins (115) and which is enclosed by an electrically insulating material that is elastic under pressure, and the insulated connecting part (114) is pressed against the supply cable (14) by a detachable clamping part (15) in such a way that the contact pins (115) are galvanically connected to the conductors of the supply cable (14).

4. Edge light (1) for traffic routes according to one of Claims 1 through 3, in which the second induction coil (121), the rectifier (122), and the lamp or lamps are situated in the second module.

5. Edge light chain having a supply cable (14) to which multiple edge lights (1) are connected at intervals according to one of Claims 1 through 4.

6. Roadway or railway lines, in particular a roadway in roadway tunnels or railway lines in railway tunnels, having one or more edge light chains according to Claim 5 in the edge area of the roadway, and/or on the shoulder of the tunnel roadway, or in the edge area and/or in the shoulder of a railway line.

7. Roadway or railway line according to Claim 6, in which the supply cable (14) extends in a groove (13) in the roadway or in the shoulder of the roadway or the railway line, and the edge lights (1) are partially situated in boreholes (10) which are open toward the groove (13), and the connecting cable (113), the inverter (111), and the first induction coil (112) are elastically mounted in the borehole (10), and the second module, which protrudes into the borehole (10), is placed on the borehole (10) as a cover, the underside of the housing (13) of the second module being adhesively bonded in a watertight manner to the roadway, the railway line, or the shoulder.

## Revendications

1. Eclairage de bordure (1) pour voies de circulation, en particulier pour routes, avec un câble d'alimentation (14) pour l'acheminement de courant continu, avec un dispositif de connexion (15, 116) pour la connexion du câble de raccordement (14) pour les lampes du module de lampe de l'éclairage de bordure (1) au câble d'alimentation (14), le raccordement du câble de raccordement (113) aux lampes à partir du câble d'alimentation (114) s'effectuant par le biais d'une première bobine d'induction (112), d'une deuxième bobine d'induction (121) et d'un redresseur (122) qui suit, **caractérisé en ce que** le raccordement du câble d'alimentation aux lampes s'effectue également par le biais d'un onduleur, et la première bobine d'induction (112) est supportée élastiquement en direction de la deuxième bobine d'induction (121).

2. Eclairage de bordure (1) pour voies de circulation selon la revendication 1, dans lequel l'onduleur (111) avec la première bobine d'induction (112) et la deuxième bobine d'induction (121) avec le redresseur (122) forment chacun un module, et les deux modules, dans l'état monté, sont disposés avec des bobines d'induction (112, 121) opposées, le module avec l'onduleur (111) étant fixé élastiquement dans la direction du module avec le redresseur (122).

3. Eclairage de bordure (1) pour voies de circulation selon une des revendications 1 ou 2, dans lequel le câble de raccordement (113) présente, à l'extrémité (116) qui est raccordée au câble d'alimentation (14), une pièce de connexion (114) avec des broches de contact (115) qui est entourée d'un matériau électriquement isolant et élastique à la compression, et la partie de connexion (114) est isolée avec une partie de serrage (15) qui est détachable, pressée sur le câble d'alimentation (14) de telle sorte que les broches de contact (115) sont raccordées par voie galvanique aux conducteurs du câble d'alimentation (14).

4. Eclairage de bordure (1) pour voies de circulation selon une des revendications 1 à 3, dans lequel la deuxième bobine d'induction (121), le redresseur (122) ainsi que la lampe ou respectivement les lampes sont disposés dans le deuxième module.

5. Chaîne d'éclairage de bordure avec un câble d'alimentation (14) auquel plusieurs éclairages de bordure (1) sont raccordés de façon espacée selon une des revendications 1 à 4.

6. Route ou voies ferroviaires, en particulier route dans des tunnels routiers ou voies ferroviaires dans des tunnels ferroviaires, avec une ou plusieurs chaînes d'éclairage de bordure selon la revendication 5 dans la zone de bordure de la route et/ou dans l'accotement de la route de tunnel ou dans la zone de bordure et ou dans l'accotement d'une voie ferroviaire.

7. Route ou voie ferroviaire selon la revendication 6, dans laquelle le câble d'alimentation (14) est placé dans une rainure (13) dans la route ou dans l'accotement de la route ou de la voie ferroviaire, et les éclairages de bordure (1) sont disposés en partie dans des alésages (10) qui sont ouverts vers la rainure (13), et le câble de connexion (113), l'onduleur (111) et la première bobine d'induction (112) sont disposés élastiquement dans l'alésage (10), et le deuxième module qui dépasse dans l'alésage (10) est placé en tant que couvercle sur l'alésage (10), le logement (13) du deuxième module étant, sur son côté inférieur, collé, de façon étanche à l'eau, à la route, à la voie ferroviaire ou à l'accotement.
